# EUROPEAN PATENT APPLICATION

(11) **EP 3 876 067 A1**
(43) Date of publication of application: **08.09.2021**
(21) Application number: 20160640.7
(22) Date of filing: 03.03.2020
(51) Int. Cl.: G05D 1/02

(54) **A METHOD AND SYSTEM FOR UPDATING AND CALIBRATING CURRENT POSITION OF A CONTROLLABLE ROLLING DEVICE**

(71) Applicant: Wheel.me AS, 0165 Oslo (NO)
(72) Inventor: Ikhsanov, Abyl, N-0194 OSLO (NO); Timenes, Atle, 1367 Snarøya (NO)
(74) Representative: Onsagers AS

(57) **Abstract**

A method and system for updating and calibrating the position of a remotely controlled rolling device 10 operating in a defined area together with a plurality of other similar rolling devices 10. The rolling device 10 comprises a housing 15 with a rolling element 20 arranged at a first end portion of the housing 15 such that rolling element 20 is in contact with a surface when the housing 15 is integrated in an object thereby making the object movable, communication means 30, a control device 40, position detection means 50, driving means 60 and power supply 70, all of which are connected to each other and installed in the housing 15. The system comprises a plurality of said rolling devices 10; an access point 100 connected to a database server 110 configured to update and calibrate positions of rolling devices 10 operating in the defined area when running a computer program that when executed performs the steps of mapping the defined area which the rolling device 10 is operating in and acquiring a reference position X of the rolling arrangement 10 in the area; driving the rolling device 10 around in the area and updating its current position in the area relative to the reference position X and transmitting a time stamped current position to an access point 100, where the time stamp defines time the rolling device 10 has driven since departure from the reference position X; detecting if other rolling devices 10 are nearby, and if so, identifying the roller devices 10 and retrieving their time stamp from the database server 110; checking if time stamps of detected and identified nearby rolling devices 10 indicate less driving time since departure from their reference position, and if so, requesting their current positions from the database server 110; updating current position of the rolling device 10 according to positions of nearby rolling devices 10 having a time stamp indicating less driving time since departure from their reference position and updating the database server 110 with a calibrated position of the rolling device 10.

## Description

### Introduction

The present invention relates to remotely controlled rolling devices that when integrated in an object makes the object movable and more specifically to a method, system and computer program for updating and calibrating the position of a rolling device operating in a defined area together with a plurality of other similar rolling devices.

### Background

The applicant has previously developed a rolling device capable of being integrated in furniture and other objects making them movable and remotely controlled.

When said rolling device is integrated in an object, the footprint of the object will remain the same as before integration. There is thus no additional area occupied by the objects when made movable. This device is described in EP 3355148 B1 and is hereby included as reference.

More specifically, the rolling device comprises a housing adapted for being integrated in the object to be moved. A rolling element is arranged at a first end portion of the housing. The rolling element can for instance be a ball or a wheel. The other end of the housing is inserted into the object to make it movable, e.g. the leg of a chair or table.

The rolling device further comprises a wireless receiver and a control device connected to each other as well as position detection means connected to the control device for acquiring the position of the rolling device. Driving means are connected to the control device and a power supply is connected to the devices arranged in the housing. The power supply is a chargeable battery. This rolling device is called an active rolling device in contrast to a rolling device without driving means, called a passive rolling device.

In the case of a chair, each leg will require a rolling element for easily moving it on a flat surface such as a floor. For making the chair autonomously moveable, it is sufficient to install and integrate only one active rolling device with controllable driving means in one of the legs of the chair. The other legs can be fitted with passive rolling devices comprising only a rolling element. This solution enables an active rolling device to be moved by remotely controlling it, thereby moving the chair autonomously. The passive rolling devices will follow the movements of the active rolling device.

For better controlled movements of an object, two or more active rolling devices are integrated in the object. This makes it easier to move and manoeuvre objects with integrated rolling devices from one position to another without them bumping into each other.

In either case, when several rolling devices are operating within the same confined area, e.g. a room in a building, precise estimation of the position of the active rolling devices is essential.

Different types of position detection means are described in EP 3355148 B1. One example is determining position by means of an external device observing positions of rolling devices and the objects they are integrated in. Different known methods can be used for this. One example is to use a camera, preferably a 3D camera. Another way is to apply Bluetooth indoor positioning by means of triangulation. This is possible by equipping active rolling devices with a Bluetooth transmitter, and arranging at least three antennas in the room where the rolling arrangements are.

When an active rolling element is operating and moving around, its actual position may deviate from the estimated position. This may be due to drift in position detection means and accumulated estimation errors. This will accumulate over time.

When there are several active rolling devices operating in the same indoor environment, there is a need for a simple and efficient way of determining a precise and updated position information of each wheel for precise manoeuvring and to avoid collisions.

The present invention proposes a solution where an active rolling device takes advantage of recent updated reference positions of other active rolling devices.

### Summary of the invention

The invention is defined by a method for updating and calibrating the position of a remotely controlled rolling device operating in a defined area together with a plurality of other similar rolling devices. The rolling device comprises a housing with a rolling element arranged at a first end portion of the housing such that rolling element is in contact with a surface when the housing is integrated in an object thereby making the object movable. The rolling device further comprises communication means, a control device, position detection means, driving means and power supply, all of which are connected to each other and installed in the housing. The method comprises the following steps:
- mapping the defined area which the rolling device is operating in and acquiring a reference position of the rolling arrangement in the area;
- driving the rolling device around in the area and updating its current position in the area relative to the reference position and transmitting a time stamped current position to a database server, where the time stamp defines the time the rolling device has driven since departure from the reference position;
- detecting if other rolling devices are nearby, and if so, identifying the roller devices and retrieving their time stamp from the database server;
- checking if time stamps of detected and identified nearby rolling devices indicate less driving time since departure from their reference position, and if so, requesting their current positions from the database server;
- updating current position of the rolling device according to positions of nearby rolling devices having a time stamp indicating less driving time since departure from their reference position and updating the database server with a calibrated position of the rolling device.

In one embodiment, mapping of the area is performed by using LiDAR for defining a digital dimensional model of the area.

In one embodiment, the reference position is defined as the position where a charging station for the rolling device is located.

In another embodiment, the reference position is defined by means of a range imaging camera directed at the area which the rolling device is operating in.

In one embodiment, nearby rolling devices are identified by receiving coded light transmitted from the nearby rolling devices.

In one embodiment, current position of the rolling device is acquired by means of encoders in the rolling device providing relative angle and rotation information, and by calculating the current position by using a previously determined position and advancing that position based upon the angle and rotational information.

In one embodiment, the position of the rolling device is determined by means of a camera directed at the rolling device and the defined area where it is operating.

In one embodiment, the current position of the rolling device is updated by combining position information acquired from the encoders and the camera and applying Kalman filtering for removing noise.

The present invention is further defined by a system for updating and calibrating the position of a remotely controlled rolling device operating in a defined area together with a plurality of other similar rolling devices. The rolling device 10 comprises a housing 15 with a rolling element 20 arranged at a first end portion of the housing 15 such that rolling element 20 is in contact with a surface when the housing 15 is integrated in an object thereby making the object movable, communication means 30, a control device 40, position detection means 50, driving means 60 and power supply 70, all of which are connected to each other and installed in the housing 15. The system further comprises an access point 100 connected to a database server 110 configured to update and calibrate positions of rolling devices 10 operating in the defined area when running a computer program that when executed performs the method described above.

The invention is further defined by a computer program that when executed by a computer performs the method described above for updating and calibrating the position of a remotely controlled rolling device 10 operating in a defined area together with a plurality of other similar rolling devices 10.

### Detailed description of the invention

In the following, the invention will be discussed and explained in more detail with reference to the appended drawings and examples of implementations. It should be understood, however, that the drawings are not intended to limit the invention to the subject-matter depicted.

As mentioned, the applicant has previously developed a rolling device capable of being integrated in furniture and other objects making them movable and remotely controlled while the footprint of the object remains the same as before integration.

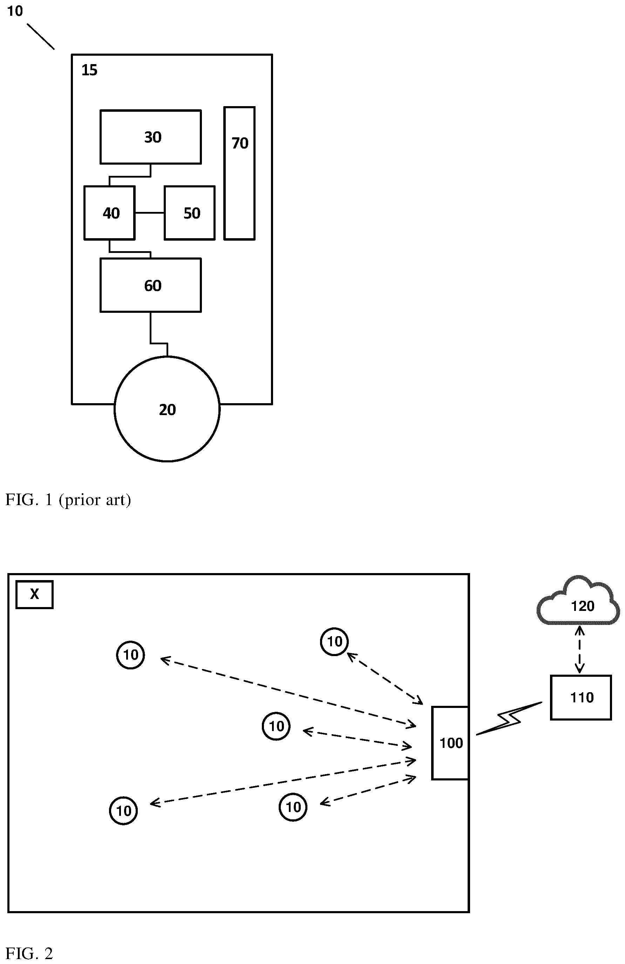

Figure 1 shows the different components comprised in the rolling device 10. The rolling device 10 comprises a housing 15, a rolling element 20 that is arranged at a first end portion of the housing 15 such that rolling element 20 is in contact with a surface when the housing 15 is integrated in an object thereby making the object movable. The rolling device 10 further comprises communication means 30, a control device 40, position detection means 50, driving means 60 and power supply 70, all of which are connected to each other and installed in the housing 15.

The rolling element 20 installed in the rolling device 10 can be of any type such as a ball or a wheel and is driven by driving means 60, such as an electromotor, ensuring that the rolling element 20 can be driven in any direction. Direction and speed is controlled by the control device 40 according to driving instructions received via the communications means 30 communicating with a remote controlling device. The communication means 30 can be of any known type such as Bluetooth of WiFi. The remote controlling device may for instance be a tablet or a smart phone running application for controlling different scenarios for moving the rolling devices around in a defined area. In this way rolling devices 10 are remotely operated and controlled according to received wireless control signals comprising movement instructions.

The power supply 70 for driving the different electronic components arranged in the housing 15 is typically a rechargeable battery. Inductive wireless power transfer can be used for charging the rechargeable battery. A receiver for receiving electromagnetic field energy is in this embodiment placed in the housing 15 of the rolling device 10.

There are different ways of acquiring the position of a rolling device 10 moving around in an area. One way is by using internal means, e.g. motion detection sensors, installed in the rolling device 10. Another way is by using external means such as a camera. Internal means are preferred when there are great number of rolling devices operating in the same area, e.g. several hundred.

Internal position detection means 50 keeps track of the position of rolling device 10 in the defined area it is operating in. Wheel encoders and inertial measurement units (IMU) are used as motion detection sensors and odometry is used for determining a current position based on generated data from the sensors.

Wheel encoders are used to detect rotation of the rolling device 20 enabling estimation of the distance travelled from a starting position. An IMU is used for estimating the orientation of the rolling device 20 and thus the direction (angle) while another IMU (wheel IMU device 200) is used for detecting any possible slippage of the rolling device, i.e. the wheel is spinning but the rolling device is not moving in any direction. Wheel IMU device 200 detects the slippage because it is attached directly to the rolling device 20 and measures the acceleration and the velocity of the rolling device 10, if the rolling device 20 starts rolling (accelerating) but the wheel IMU device 200 does not detect any acceleration. This means that a wheel slippage occurred.

Odometry is used to estimate change in position over time based on the data generated from the wheel encoders and IMU sensors. In this way the current position of a rolling device 10 relative to a starting location can be estimated. The current position of the rolling device can be calculated by using a previously determined position, direction and travelled distance. This is known as Dead Reckoning.

Odometry is however sensitive to errors due to the integration of velocity measurements over time to give position estimates.

A more accurate method for determining the position of a rolling device 10 is achieved by combining said internal method with an external method. By integrating data from various navigation systems having different physical principles one can increase the accuracy and robustness of the overall solution. By combining physical and mathematical methods, problems related to noise and drift can be alleviated. One may for instance combine Inertial Measurement Unit

(IMU and wheel IMU) and Monocular Camera Simultaneous localization and mapping (SLAM).

Combining sensor data derived from separate sources is known as Sensor Fusion, where the resulting data has less uncertainty than would be possible when the sources were used individually.

Since not all sensors are identical and further generate some noise, the noise and variances can be modeled, and the noise can be combined into the Kalman filter to reduce the noise and enhance the accuracy of the odometry. First, camera odometry and relative angle, i.e. travelling direction of the rolling device 10, derived from IMU are fused via Kalman filtering to get the best angle. At the same time, wheel encoders are fused together with wheel rotation given by wheel IMU to get the best translational distance driven. After that, the output from the two methods will be fused to get a final filtered overall odometry resulting in a more precise determination of the position of a rolling device 10. Note that the combination of sensor fusion can be different, but the core sensors will remain the same.

In the following, the invention will be explained in more detail with reference to figure 2.

Figure 2 illustrates an example of a system for updating and calibrating the position of a remotely controlled rolling device 10 operating in a defined area together with a plurality of other similar rolling devices 10. The defined area in this example is illustrated as a room and the five rolling devices 10 shown are integrated in objects thereby making the objects 10 movable. The different components comprised a rolling device 10 is described above with reference to figure 1.

The system illustrated in figure 2 comprises five rolling devices 10 enabled for two-way communication with an access point 100. Each indicated rolling device 10 may however represent a set of rolling devices 10 integrated in the same object, e.g. a chair, and where one rolling device 10 in the set of rolling devices 10 is operating as a master rolling device 10 for the others. In a set of rolling devices 10, a master rolling device 10 will receive information from the other rolling devices 10 and transmit coordinated information to the access point 100. At least one rolling device 10 in a set of rolling devices 10 needs to have IMUs to determine the moving direction of a set of wheels integrated in the same object.

The access point 100 is connected to and communicating with a database server 110 configured to update and calibrate positions of rolling devices 10 and to transmit control instructions to the rolling devices 10 operating in the defined area. The database server 110 may be remotely located, and data may be stored in the cloud 120, i.e. a cloud computing system.

The inventive method for updating and calibrating the position of a remotely controlled rolling device 10 comprises several steps.

A first step is to map the area rolling devices 10 are operating in. The area can be of any shape and can be mapped by using different techniques. If an updated layout map of the area already exists, mapping can be based on this. A mapped area is stored in the database server 110.

A precise mapping of the area can also be performed by using LiDAR, i.e. Light Detection and Ranging. By illuminating an area with laser light and measuring the reflected light with a sensor, a digital dimensional model of the area can be made.

When the area that the rolling devices 10 are going to operate in is mapped, a reference position of the rolling arrangement 10 in the area is established. This reference position, marked as X in the example shown figure 2, represents a precise known position for a rolling device 10 when the rolling device is positioned at the reference position X. A reference position X is equipped with an ID that can be recognized by a rolling device 10, e.g. by detecting a blinking LED or RFID.

A reference position X means that there will always be at least one position in a defined area where a rolling device 10 will have a precise defined position when located at reference position X. Any errors or drift in sensors in the rolling device used for calculating and determining a current position will be reset when it is at the reference position X. Errors in calculated positions will increase according to the time a rolling device has driven since departure from last calibration at a reference position X.

In one embodiment, the reference position X is a position of a charging station for the rolling device 10. A rolling device 10 typically has a rechargeable battery that must be charged when running low on power. The rolling device 10 will then drive to a charging station for being recharged. It will then at the same time update its position and time stamp this, i.e. register the time the rolling device has been driving since departure from the reference position X where it was last calibrated. The charging station is preferable a wireless charging station providing energy via inductive power.

When a rolling device 10 is located at a reference position X, a current calculated position of the rolling device 10 is updated to the position of the reference position X. The battery of a rolling device 10 needs to be recharged every now and then, typically after 3 hours of operation. The position of the rolling device 10 will therefore always be reset before 3 hours of operation. In the meantime, its actual position of the rolling device 10 may deviate from a calculated position based on data from its sensors. The amount of deviation from actual position in the defined area is expected to increase the longer the rolling device has been operated since last position update at a reference position.

When there are a plurality of rolling devices operating in the same defined area, they will require recharging at different times depending on how much power they have used. The time each rolling device has driven since they were recharged and thus were calibrated at a reference position X will therefore be different for each rolling device 10. The less time driving since last charging of a rolling device 10 means less possible deviation of a determined current position of a rolling device 10 from its actual current position.

One or more reference points may be provided in the defined area by using a range imaging camera directed at the area a rolling device 10 is operating in. The camera can identify very small features on a floor and track a distance between them, thereby providing precise position information of the rolling device 10.

When a rolling device 10 is being operated, it will drive around in the defined area and the position detection means of the rolling device 10 will update its current position in the area relative to the reference position X. A current position is time stamped. As mentioned, the time stamp defines the time the rolling device 10 has driven since departure from the reference position X.

In one embodiment, the current position of a rolling device 10 is acquired by means of encoders in the rolling device 10 where a first encoder provides relative angle and a second encoder provides rotation information. The current position of the rolling device is calculated by using a previously determined position and advancing that position based upon the angle and rotational information of the rolling device, ref. dead reckoning.

In another embodiment, the current position of a rolling device 10 is determined by means of a camera directed at the rolling device 10 and the defined area where it is operating. From pictures taken by the camera, the position of rolling devices can be found in the defined area and/or recognizable features in the floor or surroundings.

In one embodiment, positions are determined by combining different method, such as using encoders, dead reckoning and cameras to achieve a more precise estimation. Kalman filtering of data received when using the different methods can be used to further reduce noise.

When setting up the system, each rolling device 10 operating within the same defined area is registered in the database server 100 with its unique signature.

The next step of the method is detecting if other rolling devices 10 are nearby, and if so, identifying the roller devices 10 and retrieving their time stamp from the database server 110.

Different detection means can be used for detecting and identifying nearby rolling devices 10. According to one embodiment, nearby rolling devices 10 are identified by receiving coded light transmitted from the nearby rolling devices 10. In this embodiment, rolling devices 10 comprises a pulsed light source such as LED where each rolling device operating in the same defined area is adapted to transmit a unique identifiable pulsed light with a unique signature.

According to another embodiment, nearby rolling devices 10 are identified by means of RFID.

When a nearby rolling device 10 is detected and identified, a request of the identified rolling device 10 is transmitted to the database server 110 which stores updated data of the identity, position and time stamp of all rolling devices 10 operating in the defined area. The time stamp of the rolling device 10 detecting and identifying a nearby rolling device 10 is compared with the time stamp of the nearby detected rolling device 10. If it is found that a detected nearby rolling device 10 has less driving time since departure from its reference position X, the position of the nearby rolling device is requested from the database server 110 and the current position of the rolling device 10 is calibrated and updated in the database server 110 according to the position of the nearby rolling device 10.

If a rolling device 10 detects and identifies several nearby rolling devices 10, the actual position of the rolling device 10 can be further optimized by comparing timestamps and positions of nearby identified rolling devices 10 before calculating an updated and calibrated position of the rolling device 10. The rolling device 10 may for instance detect and identify three other rolling devices 10 and their positions. It is then found that the other rolling devices 10 have time stamps close to each other, indicating that their driving time since being at a reference point is similar, and that that the rolling device 10 is surrounded by the detected and identified rolling devices 10. The position of the rolling device 10 can then be calculated to be in the center of a triangle defined by the three detected rolling devices 10.

In another embodiment a dedicated calibrating rolling device 10 is assigned to drive around in the defined area for providing updated position information to other rolling devices 10. In this embodiment, the calibrating rolling device 10 frequently updates and calibrated its own position at a reference point position X, typically when it detects that the driving time since departure from its reference position is above a set limit, for instance more than 5 minutes driving time since last calibration at a reference point X. In this way, the calibrating rolling device 10 can be controlled to have a time stamp indicating a less driving time than most other driving devices operating in the defined area.

The present invention is further defined by a computer program that when executed by a computer performs the method described above for updating and calibrating the position of a remotely controlled rolling device 10 operating in a defined area together with a plurality of other similar rolling devices 10.

In one embodiment, the computer program is installed and run in the database server 110 and is controlled via a device communicating with the database server 110. This device may for instance be an App running on a tablet or smart phone.

The system, method and computer program described above provides a very precise way of determining current position of rolling devices 10 operating in a defined area.

As an example, the defined area is a storage room and the rolling devices 10 described above are integrated in pallets, tables and chairs. It is expected that some of these objects will be moved more frequently than the others.

Suppose that a rolling device A that is integrated in a pallet detects and identifies another rolling device B, integrated in a table, and that the time stamp of B indicates a shorter driving time since departure from a reference position, meaning that B has accumulated less error than A. If so, rolling device A requests the database server 110, e.g. the cloud 120, the position of B at current time and correct A's position relative to B's position.

The system may comprise hundreds of rolling devices 10 integrated in objects to be moved within same defined area and where the position of each rolling device 10 is precisely determined by the inventive method.

## Claims

1. A method for updating and calibrating the position of a remotely controlled rolling device (10) operating in a defined area together with a plurality of other similar rolling devices (10), the rolling device (10) comprises a housing (15) with a rolling element (20) arranged at a first end portion of the housing (15) such that rolling element (20) is in contact with a surface when the housing (15) is integrated in an object thereby making the object movable, communication means (30), a control device (40), position detection means (50), driving means (60) and power supply (70), all of which are connected to each other and installed in the housing (15), and where the method comprises the following steps:
- mapping the defined area which the rolling device (10) is operating in and acquiring a reference position (X) of the rolling arrangement (10) in the area;
- driving the rolling device (10) around in the area and updating its current position in the area relative to the reference position (X) and transmitting a time stamped current position to a database server (110), where the time stamp defines the time the rolling device (10) has driven since departure from the reference position (X);
- detecting if other rolling devices (10) are nearby, and if so, identifying the roller devices (10) and retrieving their time stamp from the database server (110);
- checking if time stamps of detected and identified nearby rolling devices (10) indicate less driving time since departure from their reference position, and if so, requesting their current positions from the database server (110);
- updating current position of the rolling device (10) according to positions of nearby rolling devices (10) having a time stamp indicating less driving time since departure from their reference position and updating the database server (110) with a calibrated position of the rolling device (10).

2. The method according to claim 1, by mapping the area by using LiDAR for defining a digital dimensional model of the area.

3. The method according to claim 1 or 2, by defining the reference position as the position where a charging station for the rolling device (10) is located.

4. The method according to claim 1 or 2, by acquiring the reference position by means of a range imaging camera directed at the area which the rolling device (10) is operating in.

5. The method according to any of the previous claims, where nearby rolling devices (10) are identified by receiving coded light transmitted from the nearby rolling devices (10).

6. The method according to any of the previous claims, by acquiring current position of the rolling device (10) by means of encoders in the rolling device (10) providing relative angle and rotation information, and by calculating the current position by using a previously determined position and advancing that position based upon the angle and rotational information.

7. The method according to claim 6, by further determining position of the rolling device (10) by means of a camera directed at the rolling device (10) and the defined area where it is operating.

8. The method according to claim 7, by updating current position of the rolling device (10) by combining position information acquired from the encoders and the camera and applying Kalman filtering for removing noise.

9. The method according to any of the previous claims, by providing a calibrating rolling device 10 assigned to drive around in the defined area for providing updated position information to other rolling devices 10.

10. A system for updating and calibrating the position of a remotely controlled rolling device (10) operating in a defined area together with a plurality of other similar rolling devices (10), the rolling device (10) comprises a housing (15) with a rolling element (20) arranged at a first end portion of the housing (15) such that rolling element (20) is in contact with a surface when the housing (15) is integrated in an object thereby making the object movable, communication means (30), a control device (40), position detection means (50), driving means (60) and power supply (70), all of which are connected to each other and installed in the housing (15), where the system further comprises:
an access point (100) connected to a database server (110) configured to update and calibrate positions of rolling devices (10) operating in the defined area when running a computer program that when executed performs the method according to claims 1 to 9.

11. A computer program that when executed by a computer performs the method according to claims 1 to 9 for updating and calibrating a position of a remotely controlled rolling device (10) operating in a defined area together with a plurality of other similar rolling devices (10).
